# EUROPÄISCHE PATENTSCHRIFT

(11) **EP 0 736 468 B1**
(45) Veröffentlichungstag und Bekanntmachung des Hinweises auf die Patenterteilung: **04.11.1998**
(21) Anmeldenummer: 96101428.9
(22) Anmeldetag: 01.02.1996
(51) Int. Cl.: B65G 47/91, B28B 13/04

(54) **Vorrichtung zum Umsetzen von verformbaren, plattenförmigen Gegenständen, insbesondere Ziegelformlingen**
Apparatus for conveying slab-like deformable articles, in particular tiles
Dispositif pour le déplacement d'objets déformables en forme de plaques, en particulier de tuiles

(30) Priorität: 06.04.1995 DE 19513008
(43) Veröffentlichungstag der Anmeldung: 09.10.1996
(73) Patentinhaber: Josef Meindl GmbH & Co. Dorfen, D-84405 Dorfen-Stadt 1 (DE)
(72) Erfinder: Röhrl, Josef, D-84405 Dorfen-Stadt (DE)
(74) Vertreter: Schieschke, Klaus, Dipl.-Ing.

(56) Entgegenhaltungen:
- EP-A- 0 351 571
- BE-A- 494 127
- DE-A- 2 263 477
- FR-A- 1 429 540
- US-A- 2 776 163
- US-A- 3 387 718

## Beschreibung

Die Erfindung bezieht sich auf eine Vorrichtung zum Umsetzen eines verformbaren, plattenförmigen Gegenstands, mit einer Transporteinheit und einem Unterdruckraum, nach dem Oberbegriff des Anspruchs 1.

Als allgemeiner Stand der Technik ist es bereits bekannt, an der Unterseite einer Unterdruckkammer als Halteeinrichtung eine elastische Platte vorzusehen, durch welche der über die Unterdruckkammer erzeugte Unterdruck dringt und bewirkt, daß sich der umzusetzende Gegenstand an diese elastischen Platte anlegt und damit entsprechend transportiert werden kann. Diese bekannte Vorrichtung ist damit in der Lage, als umzusetzenden Gegenstand beispielsweise einen noch einen hohen Feuchtigkeitsgehalt aufweisenden Ziegelformling zwischen zwei Bereichen zu transportieren.

Nachteilig ist hierbei jedoch, daß es mit dieser bekannten Vorrichtung nicht möglich ist, den Ziegelformling punktgenau in einem bestimmten Bereich abzusetzen, wenn er ungenau aufgenommen wurde. Damit ergeben sich in der Praxis erhebliche Fehlerquellen und Funktionsstörungen beim Umsetzen derartiger Ziegelformlinge.

Als Stand der Technik, von dem die Erfindung ausgeht, ist eine Vorrichtung bekannt (EP 0 351 571 A2), bei welcher sich der Unterdruckraum unmittelbar unter der Transporteinheit befindet. Ähnlich ist eine weitere bekannte Vorrichtung aufgebaut (DE-A-2 263 477). Durch beide Vorrichtungen ist eine schonende Behandlung des umzusetzenden Gegenstands nicht gewährleistet.

Entsprechend liegt der vorliegenden Erfindung die Aufgabe zugrunde, eine Vorrichtung der eingangs genannten Art zu schaffen, welche auf einfache Weise bewirkt, daß beim Umsetzen eine genaue Zentrierung gewährleistet ist, wobei außerdem die Oberfläche des Gegenstands schonend behandelt werden soll.

Diese Aufgabe wird erfindungsgemäß durch die Merkmale im kennzeichnenden Teil des Anspruchs 1 gelöst. Durch das Zusammenwirken der einzetnen Merkmale ergibt sich vorteilhafterweise eine genaue Zentrierung des umgesetzten Gegenstands da sich die Unterdruckkammer zusammen mit dem Unterdruckraum gegenüber dem Gegenstand zentriert und eine weitere Zentrierung über die Transporteinheit erfolgt. Außerdem ist eine schonende Oberflächenbehandlung des Gegenstand, insbesondere eines Ziegelformlings gewährleistet, da keine wesentliche mechanische Einwirkung auf die Oberfläche dieses Ziegelformlings stattfindet.

Bei Ziegelformlingen, welche im Bereich der Stirnflächen mindestens eine Ausnehmung aufweisen, besteht in weiterer Ausgestaltung der Erfindung die Möglichkeit, daß in diese Ausnehmung ein Abschlußteil einsetzbar ist. Hierbei kann in einer Ausgestaltung der Erfindung das Abschlußteil pendelnd an der Unterseite der Unterdruckkammer aufgehängt sein und durch Bewegen der Seitenplatte in die im zugeordnete Ausnehmung des Ziegelformlings eingeschoben werden.

Die Seitenplatten können verschoben oder geschwenkt werden, um aus einer Offenstellung in eine Schließstellung zu gelangen, in welcher sie den vorgenannten Unterdruckraum bilden. In einer Ausführungsform der Erfindung besteht die Möglichkeit des Schwenkens der Seitenplatten jeweils um einen Drehpunkt, und zwar mit Hilfe eines mechanischen, hydraulischen oder pneumatischen Antriebs.

In weiterer Ausgestaltung der Erfindung können jeweils zwei gegenüberliegende Seitenplatten durch mindestens eine Kolbenzylindereinheit betätigbar sein. Diese Kolbenzylindereinheiten können beispielsweise innerhalb der Unterdruckkammer angeordnet werden, so daß sich eine kompakte, raumsparende Anordnung ergibt.

Zur genauen Zentrierung der mit Hilfe der erfindungsgemäßen Vorrichtung umgesetzten Ziegelformlinge kann die Transporteinheit eine vertikal und horizontal bewegbare Tragplatte besitzen, an deren Unterseite die Dreipunktaufhängung für die Unterdruckkammer und die Halteeinrichtung angeordnet sind.

Die Drehpunkte für die Bewegung der Seitenplatten können entweder an zwei gegenüberliegenden Seitenwänden oder an der Oberseite der Unterdruckkammer angeordnet sein. Bei Anordnung der Drehpunkte an der Oberseite sind abgewinkelte Flansche vorgesehen, welche jeweils stirnseitig den Drehpunkt für die Seitenplatten bilden. Hierbei können die Stirnseiten der Flansche jeweils eine Wulst aus Gummi oder Kunststoff aufweisen, welche von umgekehrt U-förmigen Abschlußbereichen überdeckt sind. Um die Bewegung der Seitenplatten exakt zu definieren, können die Unterseiten der Unterdruckkammer stirnseitig jeweils Fixierpunkte für die Seitenplatten besitzen.

In weiterer Ausgestaltung der Erfindung kann die Oberseite der Unterdruckkammer jeweils im Bereich der Drehpunkte mit einem federnden Anschlag oberhalb der Abschlußbereiche versehen sein. Hierdurch verbleibt die Unterdruckkammer - unabhängig von der Hub- oder Transportbewegung - in ihrer genauen Positionierung und es wird eine mögliche Beschädigung des Ziegelformlings vermieden.

Die Erfindung wird nachfolgend anhand eines in der Zeichnung dargestellten Ausführungsbeispiels näher beschrieben. In der Zeichnung zeigen:
- Fig. 1: eine schematische Draufsicht der Umsetzmöglichkeit eines Ziegelformlings
- Fig. 2: eine schematische Seitenansicht der erfindungsgemäßen Vorrichtung, teils geschnitten, mit Position a bei geöffneten Seitenplatten und Position b bei geschlossenen Seitenplatten
- Fig. 3: einen Schnitt nach der Linie III-III in Fig. 2
- Fig. 4: einen Schnitt nach der Linie IV-IV nach Fig. 2
- Fig. 5: eine weitere Ausführungsmöglichkeit der erfindungsgemäßen Vorrichtung in schematischer Seitenansicht, teils geschnitten, mit geschlossenen Seitenplatten.

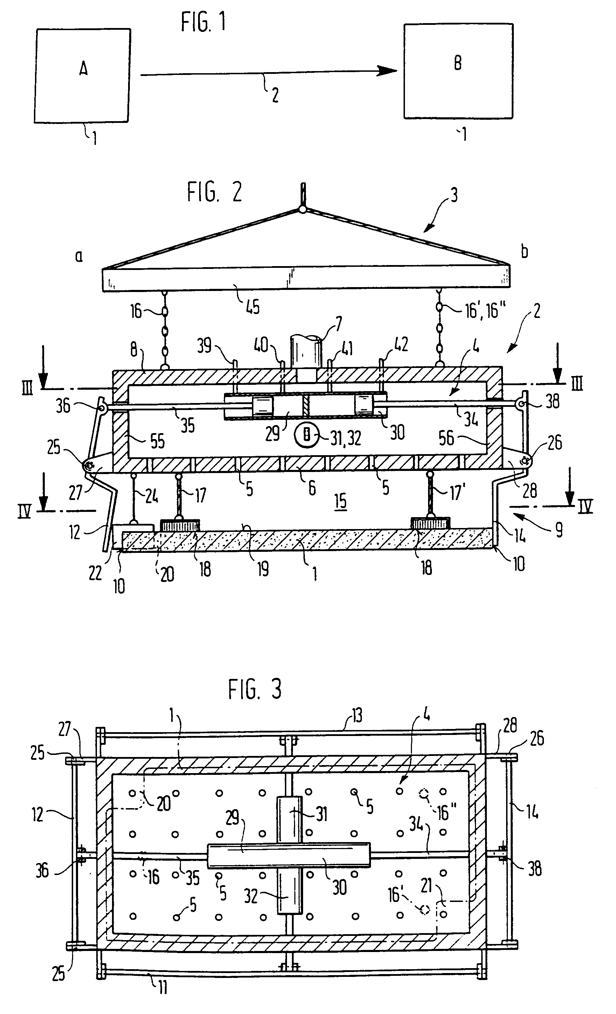

Nach Fig. 1 ist das Problem zu lösen, einen schematisch in Draufsicht dargestellten Ziegelformling 1 von einer ungeordneten Position A mit Hilfe einer Vorrichtung 2 zu einer Position B umzusetzen, welche eine genaue Zentrierung besitzen muß.

In den Fig. 2, 3 und 4 ist die hierfür verwendete Vorrichtung 2 in Seitenansicht bzw. in Draufsicht näher dargestellt.

Wie aus Fig. 2 erkennbar, weist diese Vorrichtung 2 eine Transporteinheit 3 auf, unterhalb welcher über beispielsweise drei, als Dreipunktaufhängung wirkende Elemente 16, 16' und 16'' (Seile oder Ketten) eine Unterdruckkammer 4 angeordnet ist. Diese Unterdruckkammer 4 besitzt an ihrer Unterseite 6 eine Anzahl von Saugöffnungen 5; an der Oberseite 8 der Unterdruckkammer 4 ist eine Saugleitung 7 vorgesehen. Mit Hilfe dieser Saugleitung 7 ist es möglich, in der Kammer 4 einen Unterdruck zu erzeugen, welcher eine Saugwirkung über die Saugöffnungen 5 ausübt.

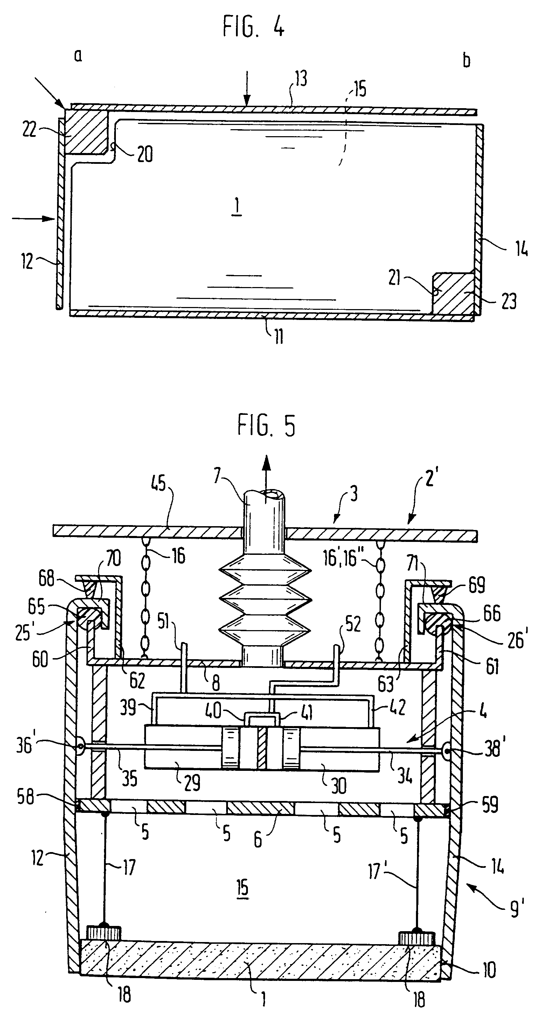

Unterhalb der Unterdruckkammer 4 befindet sich eine Halteeinrichtung 9, welche aus mehreren Seitenplatten 11, 12, 13 und 14 insbesondere nach Fig. 4 besteht. Diese Seitenplatten sind in der Lage, in Schließstellung nach Fig. 2b zwischen der Unterseite 6 der Unterdruckkammer 4 und des dazu im Abstand befindlichen Ziegelformlings 1 einen Unterdruckraum 15 zu schaffen. Hierzu legen sich nach Fig. 2b die unteren Bereiche der Seitenplatten 11, 12, 13, 14 an die jeweiligen Stirnflächen 10 des umzusetzenden Ziegelformlings 1 an. Diese Anlage kann direkt an den Stirnflächen 10 erfolgen. In nicht näher dargestellter Ausführungsform ist es in der Praxis auch möglich, daß die Seitenflächen 10 einen Preßgrad besitzen, an welchen sich die benachbarten Bereiche der entsprechenden Seitenplatten 11, 12, 13, 14 anlegen.

Zur Bildung des Unterdruckraums 15 muß der Ziegelformling 1 einen funktionsrichtigen Abstand zu der Unterseite 6 der Unterdruckkammer 4 haben. Zu diesem Zweck sind an der Unterseite der Unterdruckkammer 4 Abstandshalter 17, 17' gelenkig angeordnet, welche im unteren Bereich jeweils ein Element aufweisen, dessen Stirnseite 18 die Oberfläche 19 des Ziegelformlings 1 berührt.

Um die Seitenplatten 11, 12, 13, 14 aus einer in Fig. 2a dargestellten Offenstellung in die in Fig. 2b dargestellte Schließstellung zu bewegen, ist vorgesehen, daß die Seitenplatten jeweils um einen Drehpunkt 25 und 26 einer Lagerstelle 27 und 28 schwenkbar sind. Die oberen Enden der Seitenplatten 11, 12, 13 und 14 sind über Gelenke 36 und 38 mit Kolbenstangen 34 und 35 verbunden, welche Teil von Kolbenzylindereinheiten 29 und 30 sind.

Aus Fig. 3 ist erkennbar, daß jeweils zwei Paare von Kolbenzylindereinheiten 29 und 30 bzw. 31 und 32 im rechten Winkel zueinander stehen und in der Lage sind, die einander gegenüberliegenden Seitenplatten 12 und 14 bzw. 11 und 13 aus der Offenstellung in die Schließstellung zu bewegen (analog der Konstruktion nach Fig. 2).

Zur Durchführung dieser Bewegung sind nach Fig. 2 Leitungen 39, 40, 41 und 42 vorgesehen. Über die Leitungen 40 und 41 wird ein Druckmedium in den entsprechenden Zylinderraum der betreffenden Kolbenzylindereinheiten eingebracht, wodurch die Kolbenstangen in der Lage sind, die betreffenden Seitenplatten aus der in Fig. 2a dargestellten offenen Position in die Schließposition nach Fig. 2b zu bewegen. Überschüssiges Druckmedium tritt hierbei über die Leitungen 39 und 42 aus den betreffenden Zylinderraum der Kolbenzylindereinheiten aus.

Sollen umgekehrt die Seitenplatten 11, 12, 13, 14 von ihrer Schließstellung nach Fig. 2b in die Offenstellung nach Fig. 2a bewegt werden, so erfolgt eine Umsteuerung der Beaufschlagung der Kolbenzylindereinheiten 29, 30, 31, 32 mit Druckmedium, wodurch über die betreffenden Kolbenstangen und die über die Gelenke angelenkten Seitenplatten die entsprechende Bewegung erfolgt.

Die Ziegelformlinge 1 weisen in der Praxis gemäß Fig. 3 und 4 einander gegenüberliegende Ausnehmungen 20 und 21 auf. Um trotz dieser Ausnehmungen 20 und 21 im Ziegelformling 1 einen gut abgedichteten Unterdruckraum 15 zu erhalten, sind im Bereich der Ausnehmungen 20 und 21 Abschlußteile 22 und 23 nach Fig. 2 und 4 vorgesehen. Diese Abschlußteile 22 und 23 sind jeweils beispielsweise über ein Seil 24 pendelnd an der Unterseite 6 der Unterdruckkammer 4 aufgehängt.

Wie aus Fig. 4 ersichtlich, werden zwei Seitenwände des Abschlußteils 22 bzw. des Abschlußteils 23 von den benachbarten Flächen der Seitenplatten 12 und 13 bzw. 11 und 14 beaufschlagt. Bewegen sich nun mit Hilfe der Kolbenzylindereinheiten die Seitenplatten aus der in Fig. 4a dargestellten Offenstellung in die in Fig. 4b dargestellte Schließstellung, so werden bei dieser Bewegung die Abschlußteile 22 und 23 mitgenommen, und zwar so lange, bis die Position nach Fig. 4b erreicht ist. Damit sind auf einfache, aber funktionssichere Weise die Ausnehmungen 20 und 21 des Ziegelformlings 1 geschlossen und es ist ein einwandfrei abgedichteter Unterdruckraum 15 gewährleistet.

Die erfindungsgemäße Vorrichtung arbeitet wie folgt:

Zunächst liegt auf einer nicht näher dargestellten Trägerplatte der Ziegelformling 1 in einer ungeordneten Position A nach Fig. 1. In dieser Lage wird mit Hilfe der Transporteinheit 3 die erfindungsgemäße Vorrichtung 2 abgesenkt, wobei die Seitenplatten 11, 12, 13, 14 nach Fig. 2a in Offenstellung sind. Berühren die Stirnseiten 18 der Abstandshalter 17 und 17' die Oberfläche 19 des Ziegelformlings 1, so wird die Abwärtsbewegung der erfindungsgemäßen Vorrichtung 2 gestoppt und die Kolbenzylindereinheiten 29, 30, 31, 32 werden aktiviert.

Hierdurch bewegen sich die Seitenplatten 12, 13, 14 aus der in Fig. 2a dargestellten Offenstellung in die in Fig. 2b dargestellte Schließstellung, berühren also im unteren Bereich die jeweiligen Stirnflächen 10 des Ziegelformlings 1.

Gleichzeitig werden bei dieser Bewegung die Abschlußteile 22 und 23 in die Ausnehmungen 20 und 21 eingeschoben. Nach Abschluß dieser Bewegung liegt ein Unterdruckraum 15 vor.

Nunmehr wird über die Saugleitung 7 in der Unterdruckkammer 4 ein Unterdruck erzeugt, welcher sich über die Saugöffnungen 5 dem Unterdruckraum 15 mitteilt, wodurch der Ziegelformling 1 mit der erfindungsgemäßen Vorrichtung 2 verbunden ist. Anschließend wird die Transporteinheit 3, welche beispielsweise mit einer Tragplatte 45 versehen ist, betätigt, daß heißt zunächst angehoben und dann seitlich bewegt.

Hierbei bewirken die Elemente 16, 16' und 16'' eine weitere Justierung bzw. weitere genaue Zentrierung des Ziegelformlings 1, welcher über den Unterdruck in der Kammer 15 gehaltert wird. Im Bereich B nach Fig. 1 kann nun in genauer Position dieser Ziegelformling 1 abgesetzt werden. Anschließend werden die Seitenplatten 11, 12, 13, 14 mit Hilfe der betreffenden Kolbenzylindereinheiten geöffnet, so daß die Vorrichtung 2 zu einem erneuten Umsetzvorgang in den Bereich A zurückbewegt werden kann.

Fig. 5 zeigt eine andere Ausführungsmöglichkeit der Erfindung in Seitenansicht, im Schnitt, bei geschlossenen Seitenplatten. Während bei der Ausführungsform nach Fig. 2 die Drehpunkte 25 und 26 für die jeweiligen Seitenplatten an den Seitenwänden 55 und 56 der Unterdruckkammer 4 angeordnet sind, ist die Ausführungsform nach Fig. 5 so gestaltet, daß die Drehpunkte 25', 26' an der Oberseite 8 der Unterdruckkammer 4 liegen. Hierzu weist die Oberseite 8 abgewinkelte Flansche 60 und 61 auf, welche jeweils stirnseitig den Drehpunkt 25', 26' usw. für die Seitenplatten bilden. Die Stirnseiten der Flansche 60, 61 sind jeweils mit einer Wulst 65, 66 aus Gummi oder Kunststoff versehen. Über diese Wulst greift jeweils ein umgekehrt U-förmiger Abschlußbereich 70, 71 der jeweiligen Seitenwand 12, 14 und überdeckt diese Wulst. Damit ergibt sich ein Drehpunkt 25' bzw. 26', um den die jeweilige Seitenplatte 12, 14 usw. schwenken kann. Um diese Schwenkung exakt zu begrenzen und eine genaue Anlage an der jeweiligen Seitenwand des Ziegelformlings 1 zu erzielen, weist die Unterseite 6 der Unterdruckkammer 4 stirnseitig jeweils Fixierpunkte 58 und 59 für die Seitenplatten 12, 14 usw. auf. In Schließstellung legen sich damit die betroffenen Seitenplatten 12, 14 an diese Fixierpunkte 58 und 59, wodurch vermieden wird, daß die unteren Bereiche dieser Seitenplatten die Stirnflächen 10 des Ziegelformlings 1 deformierend beaufschlagen.

Bei der Ausführungsform nach Fig. 5 sind die Gelenke 36' und 38', welche als Verbindung der Kolbenstangen 34 und 35 der Kolbenzylindereinheiten 29 und 30 mit den Seitenplatten 12 und 14 dienen, zwischen den Drehpunkten 25' und 26' sowie den Fixierpunkten 58 und 59 angeordnet. Die Kolbenzylindereinheiten 29 und 30 sowie die nicht näher dargestellten quer liegenden Kolbenzylindereinheiten befinden sich wiederum innerhalb der Unterdruckkammer 4, wobei bei dieser Ausführungsform die Leitungen 39 und 42 sowie 40 und 41 miteinander verbunden sind und sich damit nur zwei aus der Unterdruckkammer herausführende Sammelleitungen 51 und 52 ergeben.

Bei der in Fig. 5 dargestellten Ausführungsform ergibt sich infolge der besonderen Gestaltung der Drehpunkte 25' und 26' sowie ihrer Lage oberhalb der Unterdruckkammer 4 ein sehr günstiger Schwenkweg der Seitenplatten, eine schonende Behandlung des Ziegelformlings sowie eine weitere verbesserte Zentrierung bei dessen Ablegen.

In nicht näher dargestellter Ausführungsform besteht die Möglichkeit, eine Anzahl von erfindungsgemäßen Vorrichtungen 2 bwz. 2' nebeneinander anzuordnen und jeweils über eine gemeinsame Saugleitung 7 zu aktivieren, wobei auch die betreffenden Kolbenzylindereinheiten wirkungsmäßig so miteinander verbunden sind, daß eine Anzahl von nebeneinander im Abstand angeordneten Ziegelformlingen aus einer ungeordneten Position A in eine genau zentrierte Position B bewegt werden könnnen.

Da die Abstandshalter 17 und 17' nur in einem kleinen Bereich die Oberfläche 19 des zu transportierenden Ziegelformlings 1 berühren, ergibt sich eine schonende Oberflächenbehandlung und es wird eine unerwünschte Beschädigung der Oberfläche vermieden.

Insgesamt ergibt sich eine einfach aufgebaute, jedoch sehr wirkungsvolle Vorrichtung, welche gewährleistet, daß z. B. ein umzusetzender Ziegelformling, welcher infolge des hohen Wassergehaltes noch in einem plastifizierbaren Zustand ist, schonend und genau zentriert umgesetzt werden kann.

## Patentansprüche

1. Vorrichtung zum Umsetzen eines verformbaren, plattenförmigen Gegenstands (1), mit einer Transporteinheit (3) und einer Halteeinrichtung (9), welche aus mehreren, an die Stirnflächen des umzusetzenden Gegenstands (1) anlegbaren Seitenplatten (11, 12, 13, 14) zum Bilden eines Unterdruckraums (15) zwischen Saugöffnungen (5) und dem dazu im Abstand befindlichen Gegenstand (1) besteht,
wobei die Transporteinheit mit der Halteeinrichtung (9) über mindestens ein selbstzentrierendes Element (16, 16', 16'') verbunden ist,
dadurch gekennzeichnet,
daß zwischen der Transporteinheit (3) und dem Unterdruckraum (15) eine Unterdruckkammer (4) zum Ausgleich der Druckverteilung im Unterdruckraum (15) angeordnet ist, wobei die Unterdruckkammer (4) an ihrer Unterseite die Saugöffnungen (5) aufweist und an der Oberseite eine Saugleitung (7) vorgesehen ist und
daß an der Unterseite (6) der Unterdruckkammer (4) mindestens zwei, mit ihrer Stirnseite (18) die Oberfläche des umzusetzenden Gegenstands (1) berührende Abstandshalter (17, 17') angeordnet sind.

2. Vorrichtung nach Anspruch 1,
dadurch gekennzeichnet,
daß die Abstandshalter (17, 17') gelenkig mit der Unterseite (6) der Unterdruckkammer (4) verbunden sind.

3. Vorrichtung nach Anspruch 1 und 2, wobei der plattenförmige Gegenstand als Ziegelformling ausgebildet ist, welcher im Bereich der Stirnflächen mindestens eine Ausnehmung (20, 21) aufweist,
dadurch gekennzeichnet,
daß in die Ausnehmung (20, 21) des Ziegelformlings (1) ein Abschlußteil (22, 23) einsetzbar ist.

4. Vorrichtung nach Anspruch 3,
dadurch gekennzeichnet,
daß das Abschlußteil (22, 23) pendelnd an der Unterseite (6) der Unterdruckkammer (4) aufgehängt ist und durch Bewegen der Seitenplatten (11, 12, 13, 14) in die ihm zugeordnete Ausnehmung (20, 21) des Ziegelformlings (1) einschiebbar ist.

5. Vorrichtung nach Anspruch 1,
gekennzeichnet durch,
Schwenken der Seitenplatten (11, 12, 13, 14) mit Hilfe eines mechanischen, hydraulischen oder pneumatischen Antriebs um jeweils einen Drehpunkt (25, 26; 25', 26').

6. Vorrichtung nach Anspruch 5,
dadurch gekennzeichnet,
daß jeweils zwei gegenüberliegende Seitenplatten (11, 13; 12, 14) durch mindestens eine Kolbenzylindereinheit (29, 30; 31, 32) betätigbar sind.

7. Vorrichtung nach Anspruch 5 oder 6,
dadurch gekennzeichnet,
daß die Antriebe (29, 30, 31, 32) zum Schwenken der Seitenplatten (11, 12, 13, 14) innerhalb der Unterdruckkammer (4) angeordnet sind.

8. Vorrichtung nach Anspruch 1,
dadurch gekennzeichnet,
daß die Transporteinheit (3) eine vertikal und horizontal bewegbare Tragplatte (45) aufweist, an deren Unterseite eine Dreipunktaufhängung für die Unterdruckkammer (4) und die Halteeinrichtung (9) angeordnet ist.

9. Vorrichtung nach Anspruch 5,
dadurch gekennzeichnet,
daß die Drehpunkte (25, 26; 25', 26') an zwei gegenüberliegenden Seitenwänden (55, 56) oder an der Oberseite (8) der Unterdruckkammer (4) angeordnet sind.

10. Vorrichtung nach Anspruch 9,
dadurch gekennzeichnet,
daß die Oberseite (8) abgewinkelte Flansche (60, 61) aufweist, welche jeweils stirnseitig den Drehpunkt (25', 26') für die Seitenplatten (11, 12, 13, 14) bilden.

11. Vorrichtung nach Anspruch 10,
dadurch gekennzeichnet,
daß die Stirnseiten der Flansche (60, 61) jeweils eine Wulst (65, 66) aus Gummi oder Kunststoff aufweisen, welche von umgekehrt U-förmigen Abschlußbereichen (70, 71) überdeckt sind.

12. Vorrichtung nach den Ansprüchen 10 und 11,
dadurch gekennzeichnet,
daß die Unterseite (6) der Unterdruckkammer (4) stirnseitig jeweils Fixierpunkte (58, 59) für die Seitenplatten (11, 12, 13, 14) aufweist.

13. Vorrichtung nach Ansprüchen 6, 10 bis 12,
dadurch gekennzeichnet,
daß die Gelenke (36', 38') als Verbindung der Kolbenstangen der Kolbenzylindereinheiten (29, 30, 31, 32) mit den Seitenplatten (11, 12, 13, 14) zwischen den Drehpunkten (25', 26') und den Fixierpunkten (58, 59) liegen.

14. Vorrichtung nach den Ansprüchen 10 bis 13,
dadurch gekennzeichnet,
daß die Oberseite (8) der Unterdruckkammer (4) jeweils im Bereich der Drehpunkte (25', 26') mit einem federnden Anschlag (68, 69) oberhalb der Abschlußbereiche (70, 71) versehen ist.

## Claims

1. An apparatus for transferring a deformable, plate-shaped object (1), comprising a transport unit (3) and a holding means (9), which consists of a plurality of side plates (11, 12, 13, 14) which can be laid against the end faces of the object (1) to be transferred to form a low-pressure space (15) between suction openings (5) and the object (1) which is at a distance therefrom,
the transport unit being connected to the holding means (9) by at least one self-centring element (16, 16', 16''),
characterised in that
a low-pressure chamber (4) for balancing the pressure distribution in the low-pressure space (15) is located between the transport unit (3) and the low-pressure space (15), the low-pressure chamber (4) having the suction openings (5) on its underside and a suction line (7) being provided on the upper side, and
that at least two spacers (17, 17') which contact the surface of the object (1) to be transferred by their end faces (18) are arranged on the underside (6) of the low-pressure chamber (4).

2. An apparatus according to Claim 1, characterised in that the spacers (17, 17') are articulated to the underside (6) of the low-pressure chamber (4).

3. An apparatus according to Claims 1 and 2, wherein the plate-shaped object is in the form of a green tile which has at least one cutout (20, 21) in the region of the end faces, characterised in that a closure part (22, 23) can be inserted into the cutout (20, 21) in the green tile (1).

4. An apparatus according to Claim 3, characterised in that the closure part (22, 23) is suspended in pendulum-like manner on the underside (6) of the low-pressure chamber (4) and can be inserted into the cutout (20, 21) in the green tile (1) which is associated therewith by moving the side plates (11, 12, 13, 14).

5. An apparatus according to Claim 1, characterised by pivoting of the side plates (11, 12, 13, 14) with the aid of a mechanical, hydraulic or pneumatic drive about one point of rotation (25, 26; 25', 26') each.

6. An apparatus according to Claim 5, characterised in that in each case two opposing side plates (11, 13; 12, 14) can be actuated by at least one piston-cylinder unit (29, 30; 31, 32).

7. An apparatus according to Claim 5 or 6, characterised in that the drives (29, 30, 31, 32) for pivoting the side plates (11, 12, 13, 14) are located within the low-pressure chamber (4).

8. An apparatus according to Claim 1, characterised in that the transport unit (3) has a vertically and horizontally movable supporting plate (45), on the underside of which a three-point suspension for the low-pressure chamber (4) and the holding means (9) is located.

9. An apparatus according to Claim 5, characterised in that the points of rotation (25, 26; 25', 26') are located on two opposing side walls (55, 56) or on the upper side (8) of the low-pressure chamber (4).

10. An apparatus according to Claim 9, characterised in that the upper side (8) has angled flanges (60, 61) which each form on their end faces the point of rotation (25', 26') for the side plates (11, 12, 13, 14).

11. An apparatus according to Claim 10, characterized in that the end faces of the flanges (60, 61) each have a bead (65, 66) of rubber or plastics material, which beads are covered by reversed U-shaped closure regions (70, 71).

12. An apparatus according to Claims 10 and 11, characterized in that the underside (6) of the low-pressure chamber (4) has on its end faces fixing points (58, 59) for the side plates (11, 12, 13, 14).

13. An apparatus according to Claims 6, 10 to 12, characterized in that the articulations (36', 38') as a connection means for the piston rods of the piston-cylinder units (29, 30, 31, 32) to the side plates (11, 12, 13, 14) lie between the points of rotation (25', 26') and the fixing points (58, 59).

14. An apparatus according to Claims 10 to 13, characterized in that the upper side (8) of the low-pressure chamber (4) is provided in each case in the region of the points of rotation (25', 26') with a resilient stop (68, 69) above the closure regions (70, 71).

## Revendications

1. Dispositif pour déplacer un objet déformable en forme de plaque (1), comportant une unité de transport (3) et un dispositif de retenue (9), qui est constitué par plusieurs plaques latérales (11, 12, 13, 14), qui peuvent être appliquées contre les faces frontales de l'objet à déplacer (1), pour former une chambre (15) à dépression entre des ouvertures d'aspiration (5) et au moyen de l'objet (1) qui est situé à distance de ces ouvertures, l'unité de transport étant reliée au dispositif de retenue (9) par l'intermédiaire d'au moins un élément à centrage automatique (16, 16', 16''),
caractérisé en ce
qu'entre l'unité de transport (3) et la chambre à dépression (15) est disposée une chambre à dépression (4) servant à compenser la répartition de pression dans la chambre à dépression (15), la chambre à dépression (4) comportant les ouvertures d'aspiration (5) au niveau de sa face inférieure, tandis qu'une canalisation d'aspiration (7) est prévue au niveau de sa face supérieure, et
qu'au niveau de la face inférieure (6) de la chambre à dépression (4) sont disposées au moins deux entretoises (17, 17') qui sont en contact, par leur face frontale (18), avec la surface de l'objet à déplacer (1).

2. Dispositif selon la revendication 1, caractérisé en ce que
les entretoises (17, 17') sont reliées d'une manière articulée à la face inférieure (6) de la chambre à dépression (4).

3. Dispositif selon les revendications 1 et 2, dans lequel l'objet en forme de plaque est agencé sous la forme d'une ébauche de tuile, qui possède au moins un évidement (20, 21) au niveau des faces frontales,
caractérisé en ce
qu'une pièce de fermeture (22, 23) peut être insérée dans l'évidement (20, 21) de l'ébauche de tuile (1).

4. Dispositif selon la revendication 3, caractérisé en ce
que la pièce de fermeture (22, 23) est suspendue de façon pendulaire à face inférieure (6) de la chambre à dépression (4) et peut être insérée, par déplacement des plaques latérales (11, 12, 13, 14), dans l'évidement (20, 21) de l'ébauche de tuile (1), qui lui est associé.

5. Dispositif selon la revendication 1, caractérisé par
un basculement des plaques latérales (11, 12, 13, 14) à l'aide d'un dispositif d'entraînement mécanique, hydraulique ou pneumatique autour d'un centre respectif de rotation (25, 26 ; 25', 26').

6. Dispositif selon la revendication 5, caractérisé en ce
que respectivement deux plaques latérales opposées (11, 13; 12, 14) peuvent être actionnées par au moins une unité formant vérin (29, 30 ; 31, 32).

7. Dispositif selon la revendication 5 ou 6, caractérisé en ce que
que les dispositifs d'entraînement (29, 30, 31, 32) servant à faire basculer les plaques latérales (11, 12, 13, 14) sont disposés à l'intérieur de la chambre à dépression (4).

8. Dispositif selon la revendication 1, caractérisé en ce
que l'unité de transport (3) possède une plaque de support (45), qui est déplaçable verticalement et horizontalement et sur la face inférieure de laquelle est disposée une suspension en trois points pour la chambre à dépression (4) et le dispositif de retenue (9).

9. Dispositif selon la revendication 5, caractérisé en ce
que les centres de rotation (25, 26 ; 25', 26') sont disposés sur deux parois latérales opposées (55, 56) ou sur la face supérieure (8) de la chambre à dépression (4).

10. Dispositif selon la revendication 9, caractérisé en ce
que la face supérieure (8) comporte des flancs coudés (60, 61), qui forment respectivement, frontalement, le centre de rotation (25', 26') pour les plaques latérales (11, 12, 13, 14).

11. Dispositif selon la revendication 10, caractérisé en ce
que les faces frontales des flancs (60, 61) possèdent des rebords respectifs (65, 66) en caoutchouc ou en matière plastique, qui sont recouverts par des parties de fermeture (70, 71) en forme de U retourné.

12. Dispositif selon les revendications 10 et 11, caractérisé en ce
que la face inférieure (6) de la chambre à dépression (4) possède frontalement des points respectifs de fixation (58, 59) pour les plaques latérales (11, 12, 13, 14).

13. Dispositif selon les revendications 10 à 12, caractérisé en ce
que les articulations (36', 38') sont disposés en tant que système de liaison des tiges de piston des unités formant vérins (29, 30, 31, 32) avec les plaques latérales (11, 12, 13, 14) entre les centres de rotation (25', 26') et les points de fixation (58, 59).

14. Dispositif selon les revendications 10 à 13, caractérisé en ce
que la face supérieure (8) de la chambre à dépression (4) comporte, respectivement dans la zone des centres de rotation (25', 26'), une butée élastique (68, 69) au-dessus des zones terminales (70, 71).
